# EUROPÄISCHE PATENTSCHRIFT

(11) **EP 3 853 070 B1**
(45) Veröffentlichungstag und Bekanntmachung des Hinweises auf die Patenterteilung: **29.06.2022**
(21) Anmeldenummer: 19758385.9
(22) Anmeldetag: 21.08.2019
(51) Int. Cl.: B60Q 5/00, B60Q 9/00, B60W 30/06, B62D 15/02, G08G 1/16

(54) **VERFAHREN ZUM BETREIBEN EINES FAHRERASSISTENZSYSTEMS, FAHRERASSISTENZSYSTEM, FAHRZEUG, SOWIE COMPUTERPROGRAMM UND DATENTRÄGERSIGNAL**
METHOD FOR OPERATING A DRIVER ASSISTANCE SYSTEM, DRIVER ASSISTANCE SYSTEM, VEHICLE, AND COMPUTER PROGRAMME AND DATA CARRIER SIGNAL
PROCÉDÉ SERVANT À FAIRE FONCTIONNER UN SYSTÈME D'ASSISTANCE AU CONDUCTEUR, SYSTÈME D'ASSISTANCE AU CONDUCTEUR, VÉHICULE AINSI QUE PROGRAMME INFORMATIQUE ET SIGNAL DE SUPPORT DE DONNÉES

(30) Priorität: 21.09.2018 DE 102018216130
(43) Veröffentlichungstag der Anmeldung: 28.07.2021
(73) Patentinhaber: Continental Automotive GmbH, 30165 Hannover (DE)
(72) Erfinder: MEIER-ARENDT, Guido, 65824 Schwalbach a. Ts. (DE); VON BYCHOWSKI, Heidi, 65824 Schwalbach a. Ts. (DE); WENZEL, Katrin, 65824 Schwalbach a. Ts. (DE)
(74) Vertreter: Continental Corporation
(86) Internationale Anmeldenummer: PCT/EP2019/072316
(87) Internationale Veröffentlichungsnummer: WO 2020/057882

(56) Entgegenhaltungen:
- EP-A1- 3 340 206
- DE-A1-102010 053 293
- DE-T5-112015 007 174

## Beschreibung

Die Erfindung betrifft ein Verfahren zum Betreiben eines Fahrerassistenzsystems, insbesondere eines Parkassistenzsystems, in einem Fahrzeug. Ferner betrifft die Erfindung ein Fahrerassistenzsystem, ein Fahrzeug, sowie ein Computerprogramm und ein Datenträgersignal.

Moderne Fahrzeuge verfügen heutzutage über Komfort- und Assistenzsysteme, die einem Fahrer das Führen eines Fahrzeugs stark erleichtern. Eines dieser Assistenzsysteme ist beispielsweise das Parkassistenzsystem. Dieses unterstützt das Einparken des Fahrzeugs in eine Parklücke oder auf einem Parkplatz. Die Parkassistenzsysteme umfassen für gewöhnlich mehrere Sensoren, mit denen eine Fahrzeugumgebung des Fahrzeugs nach Hindernissen oder anderen Gefahrenquellen abgesucht wird und somit die Umgebung des Fahrzeugs überwachen. Systeme zur Unterstützung manueller oder teilautomatisierter Parkvorgänge sehen dabei Ausgaben visueller und akustischer Informationen vor. Um dem Fahrer Informationen über das Umfeld zu vermitteln, beispielsweise ein Abstand zu Hindernissen, erfolgt eine Informationsausgabe auf Fahrzeugdisplays.

Ist eine Parklücke oder ein Parkplatz erkannt, so liefert ein Parkassistenzsystem Unterstützungshinweise für einen Fahrer, wie er das Fahrzeug zu führen hat, um das Fahrzeug in die erkannte Parklücke einzuparken.

Besonders komfortable Systeme sind in der Lage, einzelne oder alle hierfür notwendigen Manöver selbst auszuführen. Diese Systeme können beispielsweise auch als Parklenkassistenzsystem oder Parklenkassistent bezeichnet werden. Hierbei werden die Sensoren an ein eigenständiges Steuergerät angeschlossen, welches die Sensorsignale erfasst und auswertet. Basierend auf den ausgewerteten Sensorsignalen kann das Steuergerät ein Modell der Fahrzeugumgebung erstellen und mit weiteren separaten, eigenständigen Systemen kommunizieren, um geeignete Lenk-, Fahr- oder Bremsmanöver auszuführen. Dies ermöglicht insbesondere eine einfache und kostengünstige Implementierung von Funktionen, wie vollautomatisches Parken beispielsweise dem sogenannten Valet Parking oder dem sogenannten Trained Parking.

Unter einem Valet-Parking parkt der Fahrer das einzuparkende Fahrzeug innerhalb einer gekennzeichneten Zone, der sogenannten Drop Zone, indem er den Einparkvorgang startet und das Fahrzeug verlässt. Das Fahrzeug beginnt mit dem Einparkvorgang beispielsweise in eine Parklücke in einem Parkhaus.

Unter Trained Parking wird das Fahrzeug auf ein Einparkmanöver innerhalb einer fahrerseitig definierten Zone beispielsweise vor einer Garage, trainiert. Zum Einparken parkt der Fahrer das einzuparkende Fahrzeug innerhalb der fahrerseitig definierten Zone, startet den Einparkvorgang und verlässt das Fahrzeug. Das Fahrzeug beginnt mit einem zuvor trainierten Einparkvorgang, beispielsweise dem Rückwärtseinparken vor der Garage. Trained-Parking Systeme zeichnen Information von der Umgebung auf, die einem gefahrenen trainierten Einparkvorgang entsprechen und setzen bei einer nachfolgenden Wiedergabe die neu erfasste Information mit der zuvor gespeicherten Information in Beziehung.

Die Fahrzeuge bewegen sich dabei autonom, also ohne Zutun eines menschlichen Fahrers zu einem zugewiesenen Parkplatz und wieder zurück zu einer Abholposition.

Bei Fahrerassistenzsystemen, insbesondere Parkassistenzsystemen zum automatisierten Parken wird Verkehrsteilnehmern im Umfeld des automatisiert einparkenden Fahrzeugs signalisiert, dass das Fahrzeug sich automatisiert bewegt. Hierzu sind Verfahren bekannt, mit denen mittels optischer Projektionsvorrichtungen beispielsweise Matrixlicht, LED Scheinwerfer oder Laserprojektion Informationen auf die Fahrbahn projiziert werden.

Die DE 102014011811 A1 offenbart ein Fahrzeug mit einem Beleuchtungssystem zum Informieren eines Verkehrsteilnehmers über eine geplante Bewegung des Fahrzeugs. Die Information des Verkehrsteilnehmers erfolgt mittels Abbildens eines Lichtmusters auf eine befahrbare Fläche. Das Beleuchtungssystem ist dazu vorbereitet, das Lichtmuster mit einem ersten Merkmal zu erzeugen, an dem für den Verkehrsteilnehmer erkennbar ist, dass sich das Fahrzeug in einem autopilotgesteuerten Betriebsmodus befindet.

Die DE 102006041857 A1 offenbart ein Verfahren zur Verbesserung der Verkehrssicherheit während des Fahrens eines Fahrzeuges auf einer Fahrbahn, umfassend die Schritte vom Entdecken mindestens eines Objektes in der unmittelbaren Umgebung des Fahrzeuges, Analysieren mindestens eines entdeckten Objektes, Entscheiden, ob mindestens ein analysiertes Objekt in den Bedingungen der Verkehrssicherheit für das Fahren des Fahrzeuges relevant ist und Beleuchten der Fahrbahn mittels einer Lichtquelle mit Lichtmustern die mindestens ein Objekt anzeigen, welches in den Bedingungen der Verkehrssicherheit für das Fahren eines Fahrzeuges für relevant gehalten werden.

Die DE 102016008338 A1 offenbart ein Fahrzeug mit einem autonomen Fahrsystem, welches ein vollständiges oder teilweise selbständiges Fahren des Fahrzeugs ermöglicht, mit einem Fahrzeugbeleuchtungssystem und mit einem Steuergerät, welches im Falle eines autonomen oder teilautonomen Fahrens über das Beleuchtungssystem optische Signale erzeugt, wobei die optischen Signale eine von bisherigen Lichtsignalen abweichende Farbe und/oder Blinkart aufweisen.

Das Dokument DE 10 2010 053293 A1 offenbart ein Verfahren gemäß dem Oberbegriff des Anspruchs 1.

Im Bereich der Nutzfahrzeuge werden mittels sogenannter Piezo-Summer Signaltöne während des manuellen Rückwärtsfahrens ausgegeben. Solche Piezo-Summer weisen jedoch eine stark eingeschränkte Klangqualität auf. Zusätzlich ist die Verwendung von Piezo-Summer mit Zusatzkosten verbunden.

Der Erfindung liegt die Aufgabe zugrunde, einen autonomem Fahrmodus/eine automatische Betriebsweise zuverlässig sowie kostengünstig ohne weitere Zusatzausstattung im Fahrzeug anzuzeigen.

Diese Aufgabe wird durch die Angabe eines Verfahrens zum Betreiben eines Fahrerassistenzsystems mit den Merkmalen des Anspruchs 1 und die Angabe eines Fahrerassistenzsystems mit den Merkmalen des Anspruchs 12 gelöst. Ferner wird die Aufgabe gelöst durch die Angabe eines Fahrzeugs mit den Merkmalen des Anspruchs 19. Die Aufgabe wird zudem gelöst durch die Angabe eines Computerprogramms mit den Merkmalen des Anspruchs 20 und die Angabe eines Datenträgersignals mit den Merkmalen des Anspruchs 21.

In den Unteransprüchen sind weitere vorteilhafte Maßnahmen aufgelistet, die beliebig miteinander kombiniert werden können, um weitere Vorteile zu erzielen.

Die Aufgabe wird gelöst durch die Angabe eines Verfahrens zum Betreiben eines Fahrerassistenzsystems, insbesondere eines Parkassistenzsystems, in einem Fahrzeug, umfassend der folgenden Schritte:
- Betreiben des Fahrzeugs in einer zumindest teilautomatisierten Autonomiestufe durch das Fahrerassistenzsystem,
- Bereitstellen von zumindest einem Schallwandler, wobei der zumindest eine Schallwandler in einem Innenraum des Fahrzeugs angeordnet ist,
- Registrieren durch eine Auswerteeinheit, ob eine Anwesenheit eines Fahrzeuginsassen vorliegt,
- Aussenden eines akustischen Signals durch den Schallwandler, wobei das akustische Signal eine Schallleistung aufweist, wobei die Schallleistung durch den Schallwandler eingestellt wird, wobei das Einstellen der Schallleistung durch den Schallwandler in Abhängigkeit von der Anwesenheit eines Fahrzeuginsassen erfolgt.

Bisher wird das autonome Fahren in sechs Stufen eingeteilt, vom Level "Null" bis zum Level "fünf". Als zumindest teilautomatisierte Autonomiestufe sind hier Autonomiestufen ab Level "zwei", der sogenannten Teilautomatisierung, zu verstehen. Diese beinhalten Funktionen wie automatisches Einparken und/oder Spurhalten, etc. Ab Level "drei", der bedingten Automation, führt das Fahrzeug selbstständig Funktionen, wie das Auslösen des Blinkers, Spurwechsel und Spurhalten durch. Unter Level "vier" wird eine Hochautomatisierung verstanden, bei der die Führung des Fahrzeugs dauerhaft vom System übernommen werden kann. Unter Level "fünf" versteht man die Vollautomatisierung, bei der kein Fahrer mehr erforderlich ist.

Unter einem Schallwandler ist vorzugsweise ein Lautsprecher und/oder ein Mikrofon zu verstehen. Unter Schallleistung ist die pro Zeiteinheit von einer Schallquelle abgegebene Schallenergie einer Schallquelle zu verstehen, diese ist eine akustische Größe. Durch die Einstellung der Schallleistung kann der Schallpegel, das heißt der Schalldruckpegel, welcher die Schalleinwirkung an einen bestimmten Ort beschreibt und stark von der Art der Umgebung, beispielsweise in einem Raum oder im Freien, und der Entfernung zu der Schallquelle abhängt, eingestellt werden.

Fahrzeuginsassen können Personen oder aber auch Tiere sein. Die Anwesenheit von Fahrzeuginsassen kann auf vielfältige Weise ermittelt werden, beispielsweise durch Sitzsensoren.

Sobald ein automatisierter Fahrvorgang, vorzugweise ein automatisierter Einparkvorgang, beginnt, kann die Ausgabe akustischer Signale, mit Hilfe von im Fahrzeuginnenraum befindlichen bzw. angeordneten Schallwandlern, wie Lautsprechern vorgenommen werden, um schwächere Verkehrsteilnehmer, wie Fußgänger oder Radfahrer in Fahrzeugnähe zu informieren und zu warnen. Die Einstellung der Schallleistung erfolgt dabei in Abhängigkeit von der Anwesenheit eines Fahrzeuginsassen. Ist kein Fahrzeuginsasse vorhanden, so kann eine wesentlich höhere Schallleistung eingestellt werden, als beispielsweise bei der Anwesenheit eines Fahrzeuginsassen. Dadurch wird dem Rechnung getragen, dass mit einem Fahrzeuginsassen, dieser notfalls bei beispielsweise einer drohenden Kollision mit einem Fußgänger in den Fahrvorgang eingreifen könnte.

Eine höhere Schallleistung ist möglich, wenn sich kein Fahrzeuginsasse im Fahrzeug aufhält und somit keine Hörschäden bei einem solchen auftreten können. Befinden sich Fahrzeuginsassen im Fahrzeug, so können keine oder nur stark in der Schallleistung reduzierte akustische Signale ausgegeben werden.

Mithilfe von fahrzeugseitig vorhandenen Schallwandlern, beispielsweise Lautsprechern aus dem Innenraum beispielsweise dem Entertainment System, können akustische Signale zu automatisierten Fahrvorgängen, insbesondere Parkvorgängen für autonome oder ferngesteuerte Parkvorgänge, auf eine Art und Weise übertragen werden, dass diese von Verkehrsteilnehmern auch außerhalb des Fahrzeugs wahrgenommen werden können. Insbesondere können diese sowohl vom Nutzer als auch von weiteren im Umfeld des Parkvorgangs befindlichen Verkehrsteilnehmern wahrgenommen werden.

Dies bewirkt eine verbesserte Warnung von besonders gefährdeten Verkehrsteilnehmern bei einem autonomen Fahrvorgang.

Die Verwendung von zusätzlich im Außenbereich des Fahrzeugs verbauten Lautsprechern, was mit Zusatzkosten verbunden ist, kann erfindungsgemäß vermieden werden. Durch die Einstellbarkeit der Schallleistung durch den Schallwandler in Abhängigkeit von der Anwesenheit eines Fahrzeuginsassen können Kosten gespart werden, da keine weiteren akustischen Signalgeber im Außenraum des Fahrzeugs erforderlich sind.

Bisherige akustische Lautsprecher weisen zudem nur eine stark eingeschränkte Klangqualität auf. Die Innenschallwandler weisen eine höhere akustische Ausgabequalität auf.

Besonders bevorzugt erfolgt ein zumindest teilweises Öffnen eines öffenbares Fensters des Fahrzeugs durch Betätigung eines Fensterhebers, in Abhängigkeit von der eingestellten Schallleistung, wobei die Betätigung durch das Fahrerassistenzsystem erfolgt, und/oder zumindest ein teilweises Öffnen eines öffenbaren Schiebdachs des Fahrzeuges durch Betätigung einer Schiebedachantriebsvorrichtung, in Abhängigkeit von der eingestellten Schallleistung, wobei die Betätigung durch das Fahrerassistenzsystem erfolgt. Insbesondere umfasst das oder die Fenster die Fahrzeugseitenscheiben. Somit können die akustischen Signale durch die Verkehrsteilnehmer besser wahrgenommen werden. Die Fahrzeugseitenscheiben werden systeminitiiert durch das Fahrerassistenzsystem um einige Zentimeter geöffnet. Erfolgen, beispielsweise aufgrund von Fahrzeuginsassen keine akustischen Signale oder nur reduzierte akustische Signale, so kann auf eine systemseitig initiierte Öffnung der Fahrzeugseitenscheiben verzichtet werden.

Bevorzugt wird eine Ermittlung durchgeführt, ob zumindest ein bewegliches Objekt von zumindest einem Sensor des Fahrzeugs erfasst wird, wobei der zumindest eine Sensor zum Erfassen von beweglichen Objekten innerhalb eines Fahrzeugumfeldes ausgebildet ist, wobei ein zumindest teilweises Öffnen zumindest eines Fensters mittels des Fensterhebers bewerkstelligt wird, wobei das zumindest eine Fenster auf der zu dem Objekt weisenden Seite des Fahrzeugs angeordnet ist. Dadurch kann eine unnötige Lärmbelastung vermieden werden, und zugleich die Wahrnehmung des automatisiert fahrenden Fahrzeugs erhöht werden.

Unter beweglichen Objekte sind vor allem andere Verkehrsteilnehmer oder aber auch Tiere gemeint. Somit kann gezielt darauf hingewirkt werden, dass die Verkehrsteilnehmer auf das im zumindest teilautomatisierten Modus fahrende Fahrzeug aufmerksam werden. Erkennen fahrzeugseitige Sensoren einen sich nähernden Verkehrsteilnehmer beispielsweise im linken Fahrzeugbereich, so werden die linken Seitenfenster geöffnet oder weiter geöffnet. Bevorzugt zusätzlich kann die Schallleistung der bordinternen, linken Schallwandler beispielsweise Lautsprecher zur Ausgabe von akustischen Signalen erhöht werden, um sicherzustellen, dass der Verkehrsteilnehmer das autonom fahrende Fahrzeug wahrnimmt.

In einer bevorzugten Ausgestaltung wird eine Ermittlung durchgeführt, ob zumindest ein Objekt von zumindest einem Sensor des Fahrzeugs erfasst wird, wobei der zumindest eine Sensor zum Erfassen von beweglichen Objekten innerhalb eines Fahrzeugumfeldes ausgebildet ist, wobei die Schallleistung in Abhängigkeit von der Entfernung des erfassten Objekts zum Fahrzeug eingestellt wird. Bevorzugt wird bei einer hohen Entfernung des Objektes, also dem Verkehrsteilnehmer eine niedrige Schallleistung und bei naher Entfernung eine hohe Schallleistung ausgegeben. Somit wird ein sich nah am Fahrzeug befindlicher Verkehrsteilnehmer durch höhere Schallleistung wesentlich eindringlicher vor dem Fahrzeug gewarnt, als ein Verkehrsteilnehmer der noch sehr weit weg ist. Dies erhöht die Verkehrssicherheit.

Bevorzugt wird alternativ oder zusätzlich eine Ermittlung durchgeführt, ob zumindest ein Objekt von zumindest einem Sensor des Fahrzeugs erfasst wird, wobei der zumindest eine Sensor zum Erfassen von beweglichen Objekten innerhalb eines Fahrzeugumfeldes ausgebildet ist, wobei die Schallleistung in Abhängigkeit von der Bewegungsrichtung des erfassten Objekts zum Fahrzeug eingestellt wird.

Entfernen sich Verkehrsteilnehmer vom Fahrzeug, so wird die Schallleistung bevorzugt gesenkt, kommen die Verkehrsteilnehmer näher, so wird die Schallleistung bevorzugt erhöht. Die Anpassung der Schallleistung erfolgt somit bevorzugt in Abhängigkeit von der Distanz und der Bewegungsrichtung erkannter Verkehrsteilnehmer. Je geringer die Distanz zwischen Fahrzeug und Verkehrsteilnehmer ist, desto höher ist somit die Schallleistung. Dies erhöht die Sicherheit der Verkehrsteilnehmer in der Umgebung des zumindest teilautomatisierten Fahrzeugs. Dadurch wird ein Kollisionsrisiko von einem Verkehrsteilnehmer mit dem autonom fahrenden Fahrzeug deutlich gesenkt.

Durch die systeminitiierte Einstellung der Schallleistung als auch das systeminitiierte Öffnen der Fenster, können die akustischen Signale durch die jeweiligen Verkehrsteilnehmer somit besser wahrgenommen werden.

In weiterer bevorzugter Ausgestaltung wird ein optisches Signal durch eine Leuchteinheit ausgeben, wobei die Leuchteinheit dazu ausgebildet ist, das optische Signal an wenigstens einen Teil der Umgebung des Fahrzeugs auszugeben. Durch eine zusätzliche optische Ausgabe wird eine Erhöhung der Sicherheit der weiteren, sich im Umfeld des Fahrzeugs befindlichen, Verkehrsteilnehmer erzeugt.

In zusätzlicher bevorzugter Ausgestaltung wird das Fahrerassistenzsystem als ein Parkassistenzsystem zum Bewerkstelligen eines Einparkvorgangs oder Ausparkvorgangs ausgebildet. Vorteilhafterweise umfasst der Einparkvorgang und/oder der Ausparkvorgang zumindest zwei unterschiedliche Parkvorgänge. Besonders bevorzugt ist zumindest der Beginn des Einparkens/Ausparkens als ein erster Parkvorgang, Manövrieren des Fahrzeugs als ein zweiter Parkvorgang, Beendigung des Einparkens/Ausparkens als ein dritter Parkvorgang umfasst.

Weitere Parkvorgänge können beispielsweise sein:
- das Fahrzeug befindet sich im Automated Parking Modus,
- das Fahrzeug hat einen oder mehrere Verkehrsteilnehmer entdeckt,
- das Fahrzeug hat einen oder mehrere schwächere Verkehrsteilnehmer, z.B. Fußgänger, Radfahrer in Fahrzeugnähe detektiert, die sich mit einer hohen Wahrscheinlichkeit in Richtung des systemseitig geplanten Parkvorgangs bewegen werden,
- das Fahrzeug pausiert den Parkvorgang,
- das Fahrzeug setzt den Einparkvorgang/Ausparkvorgang fort,
- das Fahrzeug hat den Einparkvorgang/Ausparkvorgang abgeschlossen,
- Ausgabe von Fahrzeugfehlern (Systemproblem).

Bevorzugt werden unterschiedliche akustische Signale für zumindest zwei, vorzugsweise für alle unterschiedlichen Parkvorgänge bereitgestellt. Weiterhin bevorzugt wird das akustische Signal als eine Sprachausgabe und/oder eine Klangausgabe, insbesondere eine Melodie und/oder eine Tonausgabe, insbesondere ein Warnton ausgestaltet. Dabei können sogenannten Earcons, das heißt kurze Melodiefolgen, und/oder Sprachtext und/oder Sprachausgaben ausgegeben werden. Eine Kombination ist ebenfalls möglich. Beispielsweise kann ein Warnton ausgegeben werden, wenn sich ein schnell nähernder Verkehrsteilnehmer, beispielsweise ein Radfahrer, dem einparkenden oder ausparkenden Fahrzeug nähert.

Durch die Verwendung von Schallwandlern im Innenraum kann somit eine hohe Bandbreite verschiedener akustischer Signale erzeugt werden. Zusätzlich ist eine personalisierte Konfiguration der akustischen Signale möglich. Dabei kann der Fahrer bei verschiedenen Parkvorgänge beispielsweise zwischen verschiedenen Soundschemata wählen. Dadurch erkennt er genau den Status/Fortschritt des Einpark-/Ausparkvorgangs.

Vorzugsweise wird die Schallleistung in Abhängigkeit von zumindest einem Umfeldparameter des Fahrzeugs eingestellt. Ein typischer Umfeldparameter ist dabei die Wetterlage beispielsweise die Temperatur, die Tageszeit, die Wetterlage, insbesondere, ob trockenes Wetter oder nasses Wetter vorliegt. Vorzugsweise wird bei Regen kein Öffnen der Fenster veranlasst. Ein weiterer Umfeldparamter kann die Verkehrsdichte sein. Bei Nebel oder starker Verkehrsdichte, kann die Schallleistung erhöht werden, um die schlechte Sicht zu kompensieren.

Ferner wird die Aufgabe gelöst durch die Angabe eines Fahrerassistenzsystems in einem Fahrzeug zur Durchführung des wie oben beschriebenen Verfahrens, das Fahrerassistenzsystem aufweisend zumindest einen ersten Betriebsmodus zum Betreiben des Fahrzeugs in einer zumindest teilautomatisierten Autonomiestufe,
eine Auswerteeinheit, welche dazu ausgelegt ist, eine Anwesenheit eines Fahrzeuginsassen zu registrieren und zumindest ein Schallwandler, insbesondere ein Lautsprecher und/oder ein Mikrofon, wobei der zumindest eine Schallwandler in einem Innenraum des Fahrzeugs angeordnet ist, und zur Aussendung eines akustischen Signals mit einer Schallleistung ausgebildet ist, wobei die Schallleistung durch den Schallwandler einstellbar ist, wobei die Schallleistung durch den Schallwandler in Abhängigkeit von der Anwesenheit eines Fahrzeuginsassen einstellbar ist.

Somit kann bei Anwesenheit eines Fahrzeuginsassen die Schallleistung gering gehalten werden, bzw. kein akustisches Signal ausgegeben werden. Bei Abwesenheit kann die Schallleistung erhöht werden. Die Vorteile des Verfahrens können auch auf das Fahrerassistenzsystem angewendet werden.

In einer bevorzugten Ausgestaltung ist zumindest ein geöffnetes Fenster vorgesehen, wobei das zumindest eine Fenster derart ausgestaltet ist, dass das Fenster durch Betätigung eines Fensterhebers zumindest teilweise öffenbar ist, wobei die Betätigung in Abhängigkeit von der eingestellten Schallleistung durch das Fahrerassistenzsystem erfolgt, und/oder ein geöffnetes Schiebdach, wobei das Schiebdach derart ausgestaltet ist, dass das Schiebedach durch Betätigung einer Schiebedachantriebsvorrichtung zumindest teilweise öffenbar ist, wobei die Betätigung in Abhängigkeit von der eingestellten Schallleistung durch das Fahrerassistenzsystem erfolgt.

Das Öffnen der Fenster findet somit in Abhängigkeit von der eingestellten Schallleistung statt. Diese findet in Abhängigkeit von der Anwesenheit eines Fahrzeuginsassen statt. Bevorzugt findet daher bei der Anwesenheit eines Fahrzeuginsassen, also bei einer reduzierten oder gar keiner Schallleistung kein Öffnen der Fenster statt. Bei hoher Schallleistung und bei Abwesenheit eines Fahrzeuginsassen kann, ein zumindest teilweises Öffnen der Fenster stattfinden.

In weiterer bevorzugter Ausgestaltung ist ein Sensor zur Erfassung zumindest eines beweglichen Objekts innerhalb eines Fahrzeugumfeldes vorgesehen, wobei das zumindest teilweise geöffnete Fenster auf der zu dem Objekt weisenden Seite des Fahrzeugs angeordnet ist.

Diese bedeutet, dass bei einem Verkehrsteilnehmer, beispielsweise einem Fußgänger auf der der Fahrseite zugewandten Seite zumindest ein Fenster auf dieser Seite geöffnet wird, und bei einem Verkehrsteilnehmer, beispielsweise einem Fußgänger auf der der Beifahrerseite zugewandten Seite zumindest ein Fenster auf dieser Seite geöffnet wird. Dadurch kann eine Erhöhung der Registrierung des autonom fahrenden Fahrzeugs durch den Fußgänger/Verkehrsteilnehmer, bei gleichbleibender Lautstärke erzielt werden.

Weiter bevorzugt ist ein Sensor zur Erfassung zumindest eines beweglichen Objekts innerhalb eines Fahrzeugumfeldes vorgesehen. Der Schallwandler ist bevorzugt zur Einstellung der Schallleistung in Abhängigkeit von der Entfernung des erfassten Objekts zum Fahrzeug ausgestaltet. Dabei ist die Schallleistung niedrig, wenn das Objekt, also der Verkehrsteilnehmer weit vom Fahrzeug weg ist und hoch, wenn das Objekt, also der Verkehrsteilnehmer nah am Fahrzeug ist.

Vorzugsweise ist ein Sensor zur Erfassung zumindest eines beweglichen Objekts innerhalb eines Fahrzeugumfeldes vorgesehen. Bevorzugt ist der Schallwandler zur Einstellung der Schallleistung in Abhängigkeit von der Bewegungsrichtung des erfassten Objekts zum Fahrzeug ausgestaltet. Dabei wird die Schallleistung erhöht, wenn das Objekt, also der Verkehrsteilnehmer sich dem Fahrzeug nähert und erniedrigt, wenn das Objekt, also der Verkehrsteilnehmer sich vom Fahrzeug wegbewegt.

Weiterhin vorzugweise ist das akustische Signal als eine Sprachausgabe und/oder eine Klangausgabe, insbesondere eine Melodie und/oder eine Tonausgabe, insbesondere ein Warnton ausgestaltet. Der Warnton kann beispielsweise bei sich schnell nähernden Radfahrern oder Fußgänger verwendet werden. Durch die unterschiedlichen akustischen Signale kann ein sich in der Nähe befindlicher Fahrzeughalter/Fahrer schnell erkennen, ob sich beispielsweise ein Einpark-/Ausparkvorgang noch im normalen Rahmen bewegt, oder ob er Maßnahmen ergreifen muss, um eine Gefährdung eines Verkehrsteilnehmers zu verhindern, beispielsweise den Parkvorgang sofort stoppen.

Besonders bevorzugt ist das Fahrerassistenzsystem ein Parkassistenzsystem. Ein solches ist bereits in vielen Fahrzeugen integriert/vorhanden.

Die Aufgabe wird weiterhin gelöst durch die Angabe eines Fahrzeugs mit einem wie oben beschriebenen Fahrerassistenzsystem umfassend ein Innenraum mit einem Schallwandler. Insbesondere ist das Fahrzeug ein Kraftfahrzeug zur Personenbeförderung.

Ferner wird die Aufgabe gelöst durch die Angabe eines Computerprogramms, umfassend Befehle, die bewirken, dass das obige Fahrerassistenzsystem das wie oben beschriebene Verfahren ausführt. Insbesondere kann das Computerprogramm nachträglich in alle Fahrzeuge, welche ein Fahrerassistenzsystem aufweisen, installiert werden.

Ferner wird die Aufgabe gelöst durch die Angabe eines Datenträgersignals, das das oben genannte Computerprogramm überträgt. Ein elektronisches Datenträgersignal ist durch eine beliebige digitale Signalfolge gegeben, welche auf einem flüchtigen oder nicht-flüchtigen elektronischen Speicher abgelegt werden kann. Ein solches Computerprogramm kann beispielsweise via Cloud oder Netzwerk beispielsweise von dem Fahrzeughersteller im Sinne einer Nachrüstung übertragen werden, ohne dass der Fahrzeughalter eine Werkstatt aufsuchen muss.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: ein Fahrzeug mit einem als Parkassistenzsystem ausgestalteten Fahrerassistenzsystem in einem Blockschaubild,
FIG 2: ein Verfahren gemäß der Erfindung in einem Flussdiagramm.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

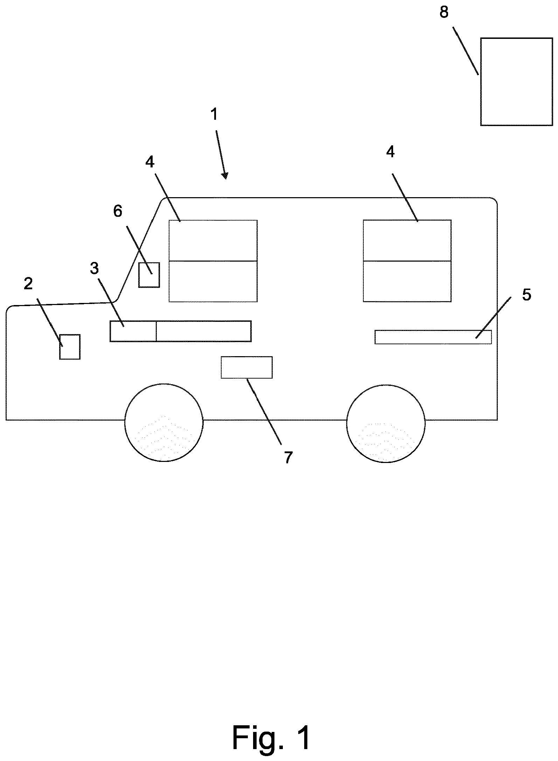

FIG 1 zeigt schematisch ein Fahrzeug 1 mit einem als Parkassistenzsystem ausgestalteten Fahrerassistenzsystem gemäß der Erfindung. Das Parkassistenzsystem 2 weist Sensoren 3 auf, welche auch zum Vermessen der Parklücke verwendet werden können. Diese Sensoren können einen Frontsensor, einen Seitensensor oder einen hinteren Sensor oder Sensorarrays umfassen. Bevorzugt können die Sensoren als Ultraschallsensensorik ausgebildet sein. Ferner umfasst das Fahrzeug 1 Fenster 4, wobei die Fenster 4 mit Fensterheber betätigt, das heißt, geöffnet und geschlossen werden können. Der Fensterheber kann dabei vom Parkassistenzsystem 2 betätigt werden. Zudem kann ein Schiebedach (nicht gezeigt) mit einer Schiebedachantriebsvorrichtung vorgesehen sein, welche ebenfalls vom Parkassistenzsystem 2 betätigt werden kann.

Ferner ist eine am Fahrzeug 1 angebrachte und nach außen in die Fahrzeugumgebung weisende, optische Leuchteinheit 5 vorgesehen. Das Fahrzeug 1 weist mehrere linksseitige und rechtsseitige, als Innenlautsprecher 6 ausgestaltete, Schallwandler auf, welche hier mit dem Bezugszeichen 6 gekennzeichnet sind; dabei ist mit links- und rechtsseitig einmal bei der Fahrertür oder zur Fahrertür hinweisend und gegenüber bei der Beifahrertür gemeint. Die Innenlautsprecher 6 weisen einen Regler zur Einstellung der Lautstärke auf. Ferner kann der Regler oder ein weiterer Regler dazu ausgebildet sein, die links- und rechtszeitigen Innenlautsprecher 6 separat in ihrer Lautstärke einzustellen.

Ferner weist das Parkassistenzsystem 2 Sitzsensoren 7, welche im Sitz verarbeitet sein können oder Ultraschallsensoren zur Erfassung der Anwesenheit eines Fahrzeuginsassen auf. Das Fahrzeug 1 kann ferner eine Kommunikationsschnittstelle zur externen Anbindung an eine Cloud 8 oder einen externen Server aufweisen. Somit kann ein Update des Verfahrens jederzeit problemlos in dem Fahrzeug 1 installiert werden.

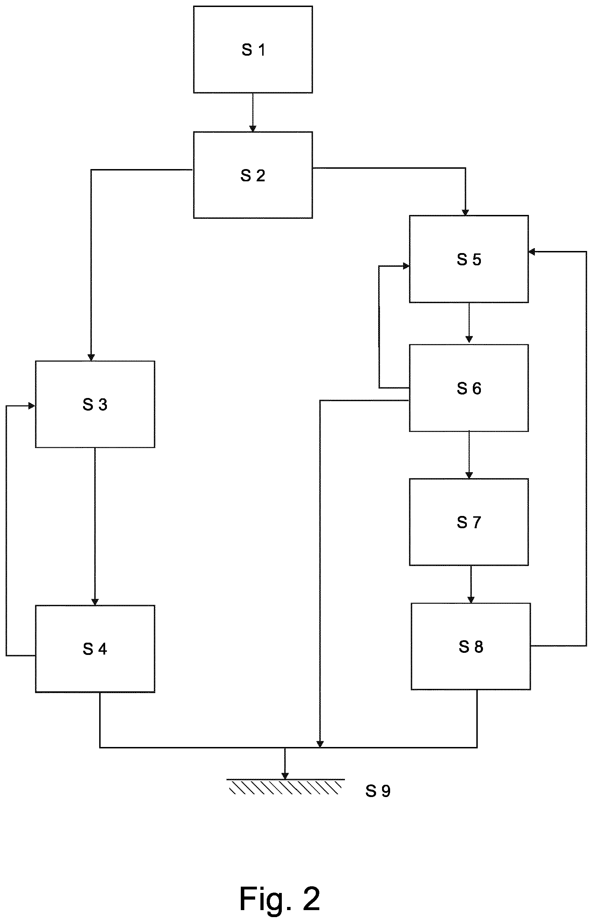

FIG 2 zeigt ein Verfahren gemäß der Erfindung. Hierbei startet ein Fahrer in einem Fahrzeug 1 (FIG 1) gemäß der Erfindung einen automatisierten Einparkvorgang in einem Schritt S1. Eine solcher kann als Valet parking oder Trained parking ausgestaltet sein, bei dem keine Anwesenheit des Fahrers erforderlich ist. Dazu kann die Parklücke mittels Sensoren 3 (FIG 1) vermessen werden. In einem Schritt S2 überprüft das Parkassistenzsystem 2 (FIG 2) des Fahrzeugs 1 (FIG 1), ob sich Fahrzeuginsassen im Fahrzeug 1 (FIG 1) befinden. Dies wird anhand von beispielsweise Sitzsensoren 7 (FIG 1) geprüft.

Befinden sich ein oder mehrere Fahrzeuginsassen im Fahrzeug 1 (FIG 1), so wird Schritt S3 ausgeführt und das Parkassistenzsystem 2 (FIG 1) wird in den Modus "Anwesenheit eines Fahrzeuginsassen" versetzt. Dies bedeutet, dass bei dem Innenlautsprecher 6 (FIG 1) keine oder eine stark eingeschränkte Schallleistung eingestellt wird, um den Fahrzeuginsassen vor zu großem Lärm /Schall zu schützen. Es erfolgt jedoch eine Anzeige durch eine optische Leuchteinheit 5 an der Außenkarosserie des Fahrzeugs. In einem Schritt S4 wird geprüft, ob das Fahrzeug 1 (FIG 1) seine endgültige Einparkposition erreicht hat. Wenn ja wird das Verfahren in eine Schritt S9 beendet.

Wenn nein, wird das Verfahren in dem Schritt S3 solange fortgeführt, bis die endgültige Einparkposition erreicht worden ist.

Befinden sich keine Fahrzeuginsassen im Fahrzeug 1 (FIG 1), so wird ein Schritt S5 ausgeführt und das Parkassistenzsystem 2 (FIG 1) wird in den Modus "Fehlen eines Fahrzeuginsassen" versetzt. Im Schritt S5 erfolgt eine Anzeige durch eine optische Leuchteinheit 5 an der Außenkarosserie des Fahrzeugs. In einen nächsten Schritt S6 werden anhand von Sensoren die Umfeldparameter überprüft, das heißt, ob es regnet oder nicht. Zudem wird anhand eines weiteren Sensors geprüft, ob sich Verkehrsteilnehmer innerhalb eines Fahrzeugumfeldes befinden. Dabei wird die genaue Position, d.h. ob sich der Verkehrsteilnehmer auf der der Fahrerseite oder auf der der Beifahrerseite zugewandten Seite und die Distanz zum Fahrzeug 1 (FIG 1) als auch die Bewegungsrichtung erfasst. Situationsabhängig werden nun die Innenlautsprecher 6 eingestellt. Wird kein schwächerer Verkehrsteilnehmer entdeckt, so wird der Schritt S5 und der Schritt S6 erneut ausgeführt, bis das Verfahren beendet worden ist, Schritt S9.

Wird in einem Schritt S7 ein schwächerer Verkehrsteilnehmer entdeckt, so wird, abhängig von den ermittelten Umfeldparameter, der Distanz und der Bewegungsrichtung die Schallleistung des Innenlautsprechers 6 in einem Schritt S8 eingestellt und wetterabhängig zumindest diejenige Fensterseite, die dem Verkehrsteilnehmer zugewandt ist, geöffnet. Das heißt, wird ein Verkehrsteilnehmer auf der der Fahrerseite zugewandten Seite ermittelt, so wird auf dieser Seite das Fenster bei trockenem Wetter geöffnet und die Schallleistung des Innenlautsprechers 6 (FIG 1) auf dieser Seite anhand der ermittelten Parameter eingestellt.

Auch andere bordeigenen Geräte, welche eine akustische Ausgabe bewerkstelligen, können hierfür eingesetzt werden. Ist der Fahrer weit weg, so kann eine niedrige Schallleistung eingestellt werden, welche bei näherkommen des Verkehrsteilnehmers an das Fahrzeug 1 (FIG 1) anwächst. Ferner können verschiedene akustische Signale ausgegeben werden. Ist der Verkehrsteilnehmer sehr nahe am einparkenden Fahrzeug, kann beispielsweise ein lauter Signalton/Warnton ausgegeben werden. Auch können der Start des Einparkvorgangs und das Ende durch kurze Signaltöne angezeigt werden. Zudem können diese durch eine Sprachausgabe beispielsweise "Einparkvorgang startet" unterstützt werden. In einem Schritt S9 wird geprüft, ob das Fahrzeug 1 (FIG 1) seine Parkposition erreicht hat. Wenn nicht, werden die Schritte S5, S6, S7 und S8 erneut nacheinander ausgeführt. Hat das Fahrzeug 1 (FIG 1) seine Position erreicht, so wird das Verfahren in dem Schritt S9 beendet.

Das Verfahren kann auf alle autonomen Fahrvorgänge, wie beispielsweise ausparken, im Stau fahren, etc. angewendet werden.

### Bezugszeichenliste:

- 1: Fahrzeug
- 2: Parkassistenzsystem
- 3: Sensoren
- 4: Fenster
- 5: optische Leuchteinheit
- 6: Innenlautsprecher
- 7: Sitzsensoren
- 8: Cloud

- S: Verfahrensschritte

## Patentansprüche

1. Verfahren zum Betreiben eines Fahrerassistenzsystems, insbesondere eines Parkassistenzsystems (2), in einem Fahrzeug (1), umfassend die Schritte:
- Betreiben des Fahrzeugs (1) in einer zumindest teilautomatisierten Autonomiestufe durch das Fahrerassistenzsystem,
- Bereitstellen von zumindest einem Schallwandler, wobei der zumindest eine Schallwandler in einem Innenraum des Fahrzeugs (1) angeordnet ist,
- Registrieren durch eine Auswerteeinheit, ob eine Anwesenheit eines Fahrzeuginsassen vorliegt,
- Aussenden eines akustischen Signals durch den Schallwandler, wobei das akustische Signal eine Schallleistung aufweist, **dadurch gekennzeichnet, dass** die Schallleistung durch den Schallwandler eingestellt wird, wobei das Einstellen der Schallleistung durch den Schallwandler in Abhängigkeit von der Anwesenheit eines Fahrzeuginsassen erfolgt.

2. Verfahren nach Anspruch 1, weiter **gekennzeichnet durch**: zumindest teilweises Öffnen eines öffenbares Fensters (4) des Fahrzeugs (1) durch Betätigung eines Fensterhebers in Abhängigkeit von der eingestellten Schallleistung, wobei die Betätigung durch das Fahrerassistenzsystem erfolgt, und/oder zumindest teilweises Öffnen eines öffenbaren Schiebdachs des Fahrzeuges durch Betätigung einer Schiebedachantriebsvorrichtung, in Abhängigkeit von der eingestellten Schallleistung, wobei die Betätigung durch das Fahrerassistenzsystem erfolgt.

3. Verfahren nach Anspruch 2, **dadurch gekennzeichnet, dass** eine Ermittlung durchgeführt wird, ob zumindest ein bewegliches Objekt von zumindest einem Sensor (3) des Fahrzeugs (1) erfasst wird, wobei der zumindest eine Sensor (3) zum Erfassen von beweglichen Objekten innerhalb eines Fahrzeugumfeldes ausgebildet ist, wobei ein zumindest teilweises Öffnen zumindest eines Fensters (4) mittels des Fensterhebers bewerkstelligt wird, wobei das zumindest eine Fenster (4) auf der zu dem Objekt weisenden Seite des Fahrzeugs (1) angeordnet ist.

4. Verfahren nach einem der vorhergehenden Ansprüche, **dadurch gekennzeichnet, dass** eine Ermittlung durchgeführt wird, ob zumindest ein Objekt von zumindest einem Sensor (3) des Fahrzeugs (1) erfasst wird, wobei der zumindest eine Sensor (3) zum Erfassen von beweglichen Objekten innerhalb eines Fahrzeugumfeldes ausgebildet ist, wobei die Schallleistung in Abhängigkeit von der Entfernung des erfassten Objekts zum Fahrzeug (1) eingestellt wird.

5. Verfahren nach einem der vorhergehenden Ansprüche, **dadurch gekennzeichnet, dass** eine Ermittlung durchgeführt wird, ob zumindest ein Objekt von zumindest einem Sensor (3) des Fahrzeugs (1) erfasst wird, wobei der zumindest eine Sensor (3) zum Erfassen von beweglichen Objekten innerhalb eines Fahrzeugumfeldes ausgebildet ist, wobei die Schallleistung in Abhängigkeit von der Bewegungsrichtung des erfassten Objekts zum Fahrzeug (1) eingestellt wird.

6. Verfahren nach einem der vorhergehenden Ansprüche, **dadurch gekennzeichnet, dass** ein optisches Signal durch eine Leuchteinheit (5) ausgeben wird, wobei die Leuchteinheit (5) dazu ausgebildet ist, das optische Signal an wenigstens einen Teil der Umgebung des Fahrzeugs (1) auszugeben.

7. Verfahren nach einem der vorhergehenden Ansprüche, **dadurch gekennzeichnet, dass** das Fahrerassistenzsystem als ein Parkassistenzsystem (2) zum Bewerkstelligen eines Einparkvorgangs und/oder Ausparkvorgangs ausgebildet wird und der Einparkvorgang und/oder der Ausparkvorgang zumindest zwei unterschiedliche Parkvorgänge umfasst.

8. Verfahren nach Anspruch 7, **dadurch gekennzeichnet, dass** zumindest der Beginn des Einparkens und/oder des Ausparkens als ein erster Parkvorgang, Manövrieren des Fahrzeuges als ein zweiter Parkvorgang, Beendigung des Einparkens und/oder des Ausparkens als ein dritter Parkvorgang umfasst ist.

9. Verfahren nach Anspruch 7 oder 8, **dadurch gekennzeichnet, dass** unterschiedliche akustische Signale für zumindest zwei unterschiedliche Parkvorgänge bereitgestellt werden.

10. Verfahren nach einem der vorhergehenden Ansprüche, **dadurch gekennzeichnet, dass** das akustische Signal als eine Sprachausgabe und/oder eine Klangausgabe, insbesondere eine Melodie und/oder eine Tonausgabe, insbesondere ein Warnton ausgestaltet wird.

11. Verfahren nach einem der vorhergehenden Ansprüche, **dadurch gekennzeichnet, dass** die Schallleistung in Abhängigkeit von zumindest einem Umfeldparameter des Fahrzeugs (1) eingestellt wird.

12. Fahrerassistenzsystem in einem Fahrzeug (1) zur Durchführung des Verfahrens nach einem der vorhergehenden Ansprüche 1 bis 11, das Fahrerassistenzsystem aufweisend
zumindest einen ersten Betriebsmodus zum Betreiben des Fahrzeugs (1) in einer zumindest teilautomatisierten Autonomiestufe,
eine Auswerteeinheit, welche dazu ausgelegt ist, eine Anwesenheit eines Fahrzeuginsassen zu registrieren und
zumindest ein Schallwandler, wobei der zumindest eine Schallwandler in einem Innenraum des Fahrzeugs (1) angeordnet ist, und zur Aussendung eines akustischen Signals mit einer Schallleistung ausgebildet ist, wobei die Schallleistung durch den Schallwandler einstellbar ist, **dadurch gekennzeichnet, dass** die Schallleistung durch den Schallwandler in Abhängigkeit von der Anwesenheit eines Fahrzeuginsassen einstellbar ist.

13. Fahrerassistenzsystem nach Anspruch 12, **dadurch gekennzeichnet, dass** zumindest ein geöffnetes Fenster (4) vorgesehen ist, wobei das zumindest eine Fenster (4) derart ausgestaltet ist, dass das Fenster (4) durch Betätigung eines Fensterhebers zumindest teilweise öffenbar ist, wobei die Betätigung in Abhängigkeit von der eingestellten Schallleistung durch das Fahrerassistenzsystem erfolgt, und/oder ein geöffnetes Schiebdach vorgesehen ist, wobei das Schiebdach derart ausgestaltet ist, dass das Schiebedach durch Betätigung einer Schiebedachantriebsvorrichtung zumindest teilweise öffenbar ist, wobei die Betätigung in Abhängigkeit von der eingestellten Schallleistung durch das Fahrerassistenzsystem erfolgt.

14. Fahrerassistenzsystem nach Anspruch 12 oder 13, **dadurch gekennzeichnet, dass** ein Sensor (3) zur Erfassung zumindest eines beweglichen Objekts innerhalb eines Fahrzeugumfeldes vorgesehen ist, wobei das zumindest teilweise geöffnete Fenster (4) auf der zu dem Objekt weisenden Seite des Fahrzeugs (1) angeordnet ist.

15. Fahrerassistenzsystem nach einem der vorhergehenden Ansprüche 12 bis 14, **dadurch gekennzeichnet, dass** ein Sensor (3) zur Erfassung zumindest eines beweglichen Objekts innerhalb eines Fahrzeugumfeldes vorgesehen ist, wobei der Schallwandler zur Einstellung der Schallleistung in Abhängigkeit von der Entfernung des erfassten Objekts zum Fahrzeug (1) ausgestaltet ist.

16. Fahrerassistenzsystem nach einem der vorhergehenden Ansprüche 12 bis 15, **dadurch gekennzeichnet, dass** ein Sensor (3) zur Erfassung zumindest eines beweglichen Objekts innerhalb eines Fahrzeugumfeldes vorgesehen ist, wobei der Schallwandler zur Einstellung der Schallleistung in Abhängigkeit von der Bewegungsrichtung des erfassten Objekts zum Fahrzeug (1) ausgestaltet ist.

17. Fahrerassistenzsystem nach einem der vorhergehenden Ansprüche 12 bis 16, **dadurch gekennzeichnet, dass** das akustische Signal als eine Sprachausgabe und/oder eine Klangausgabe, insbesondere eine Melodie und/oder eine Tonausgabe, insbesondere ein Warnton ausgestaltet ist.

18. Fahrerassistenzsystem nach einem der vorhergehenden Ansprüche 12 bis 17, **dadurch gekennzeichnet, dass** das Fahrerassistenzsystem ein Parkassistenzsystem ist.

19. Fahrzeug (1) mit einem Fahrerassistenzsystem nach einem der Ansprüche 12 bis 18, umfassend ein Innenraum mit einem Schallwandler.

20. Computerprogramm, umfassend Befehle, die bewirken, dass das Fahrerassistenzsystem nach einem der vorhergehenden Ansprüche 12 bis 18 das Verfahren nach einem der vorhergehenden Ansprüche 1 bis 11 ausführt.

21. Datenträgersignal, das das Computerprogramm nach Anspruch 20 überträgt.

## Claims

1. Method for operating a driver assistance system, in particular a parking assistance system (2), in a vehicle (1), comprising the steps of:
- operating the vehicle (1) at an at least partially automated autonomy level by the driver assistance system,
- providing at least one acoustic transducer, wherein the at least one acoustic transducer is arranged in an interior of the vehicle (1),
- registering, by means of an evaluation unit, whether a vehicle occupant is present,
- transmitting an acoustic signal through the acoustic transducer, wherein the acoustic signal has a sound power, **characterized in that** the sound power is adjusted by the acoustic transducer, wherein the adjustment of the sound power by the acoustic transducer takes place depending on the presence of a vehicle occupant.

2. Method according to Claim 1, further **characterized by**: at least partial opening of an openable window (4) of the vehicle (1) performed through the actuation of a window lifter, depending on the set sound power, wherein the actuation is performed by the driver assistance system, and/or at least partial opening of an openable sliding roof of the vehicle performed through the actuation of a sliding roof drive apparatus, depending on the set sound power, wherein the actuation is performed by the driver assistance system.

3. Method according to Claim 2, **characterized in that** an ascertainment is made as to whether at least one movable object is acquired by at least one sensor (3) of the vehicle (1), wherein the at least one sensor (3) is designed for the acquisition of movable objects within a vehicle surroundings, wherein an at least partial opening of at least one window (4) by means of the window lifter is effectuated, wherein the at least one window (4) is arranged on the side of the vehicle (1) that faces toward the object.

4. Method according to one of the preceding claims, **characterized in that** an ascertainment is made as to whether at least one object is acquired by at least one sensor (3) of the vehicle (1), wherein the at least one sensor (3) is designed to acquire movable objects within a vehicle surroundings, wherein the sound power is adjusted depending on the distance of the acquired object from the vehicle (1).

5. Method according to one of the preceding claims, **characterized in that** an ascertainment is made as to whether at least one object is acquired by at least one sensor (3) of the vehicle (1), wherein the at least one sensor (3) is designed to acquire movable objects within a vehicle surroundings, wherein the sound power is adjusted depending on the direction of movement of the acquired object with respect to the vehicle (1).

6. Method according to one of the preceding claims, **characterized in that** a visual signal is output by a lighting unit (5), wherein the lighting unit (5) is designed to output the visual signal to at least a part of the surroundings of the vehicle (1).

7. Method according to one of the preceding claims, **characterized in that** the driver assistance system is designed as a parking assistance system (2) for the effectuation of a parking procedure and/or procedure for pulling out of a parking space, and the parking procedure and/or the pulling-out procedure comprises at least two different parking procedures.

8. Method according to Claim 7, **characterized in that** at least the start of the parking and/or of the pulling out comprises a first parking procedure, maneuvering the vehicle comprises a second parking procedure, and ending the parking and/or pulling out comprises a third parking procedure.

9. Method according to Claim 7 or 8, **characterized in that** different acoustic signals are made available for at least two different parking procedures.

10. Method according to one of the preceding claims, **characterized in that** the acoustic signal is designed as a voice output and/or a sound output, in particular a melody and/or a tone output, in particular a warning tone.

11. Method according to one of the preceding claims, **characterized in that** the sound power is adjusted depending on at least one surroundings parameter of the vehicle (1).

12. Driver assistance system in a vehicle (1) for carrying out the method according to one of the preceding Claims 1 to 11, the driver assistance system comprising at least one first operating mode for operating the vehicle (1) at an at least partially automated autonomy level,
an evaluation unit that is designed to register a presence of a vehicle occupant,
and
at least one acoustic transducer, wherein the at least one acoustic transducer is arranged in an interior of the vehicle (1) and is designed for the transmission of an acoustic signal with a sound power, **characterized in that** the sound power can be adjusted by the acoustic transducer, wherein the sound power can be adjusted by the acoustic transducer depending on the presence of a vehicle occupant.

13. Driver assistance system according to Claim 12, **characterized in that** at least one opened window (4) is provided, wherein the at least one window (4) is designed in such a way that the window (4) can be at least partially opened through the actuation of a window lifter, wherein the actuation takes place depending on the sound power set by the driver assistance system, and/or an opened sliding roof is provided, wherein the sliding roof is designed in such a way that the sliding roof can be at least partially opened through the actuation of a sliding roof drive apparatus, wherein the actuation takes place depending on the sound power set by the driver assistance system.

14. Driver assistance system according to Claim 12 or 13, **characterized in that** a sensor (3) is provided for the acquisition of at least one movable object within a vehicle surroundings, wherein the at least partially opened window (4) is arranged on the side of the vehicle (1) that faces toward the object.

15. Driver assistance system according to one of the preceding Claims 12 to 14, **characterized in that** a sensor (3) is provided for the acquisition of at least one movable object within a vehicle surroundings, wherein the acoustic transducer is designed to adjust the sound power depending on the distance of the acquired object from the vehicle (1).

16. Driver assistance system according to one of the preceding Claims 12 to 15, **characterized in that** a sensor (3) is provided for the acquisition of at least one movable object within a vehicle surroundings, wherein the acoustic transducer is designed to adjust the sound power depending on the direction of movement of the acquired object with respect to the vehicle (1).

17. Driver assistance system according to one of the preceding Claims 12 to 16, **characterized in that** the acoustic signal is designed as a voice output and/or a sound output, in particular a melody and/or a tone output, in particular a warning tone.

18. Driver assistance system according to one of the preceding Claims 12 to 17, **characterized in that** the driver assistance system is a parking assistance system.

19. Vehicle (1) with a driver assistance system according to one of Claims 12 to 18, comprising an interior with an acoustic transducer.

20. Computer program comprising commands that cause the driver assistance system according to one of the preceding Claims 12 to 18 to carry out the method according to one of the preceding Claims 1 to 11.

21. Data carrier signal that transmits the computer program according to Claim 20.

## Revendications

1. Procédé pour faire fonctionner un système d'assistance au conducteur, notamment un système d'assistance au stationnement (2), dans un véhicule (1), comprenant les étapes suivantes :
- mise en fonctionnement du véhicule (1) dans un niveau d'autonomie au moins partiellement automatisé par le système d'assistance au conducteur,
- fourniture d'au moins un transducteur acoustique, l'au moins un transducteur acoustique étant disposé dans un habitacle du véhicule (1),
- enregistrement par une unité d'interprétation s'il y a une présence d'un occupant du véhicule,
- émission d'un signal acoustique par le transducteur acoustique, le signal acoustique possédant une puissance sonore, **caractérisé en ce que** la puissance sonore est réglée par le transducteur acoustique, le réglage de la puissance sonore par le transducteur acoustique s'effectuant en fonction de la présence d'un occupant du véhicule.

2. Procédé selon la revendication 1, **caractérisé en outre par** : ouverture au moins partielle d'une vitre (4) pouvant être ouverte du véhicule (1) par actionnement d'un lève-vitre en fonction de la puissance acoustique réglée, l'actionnement s'effectuant par le système d'assistance au conducteur, et/ou ouverture au moins partielle d'un toit coulissant ouvrant du véhicule par actionnement d'un dispositif d'entraînement de toit coulissant en fonction de la puissance acoustique réglée, l'actionnement s'effectuant par le système d'assistance au conducteur.

3. Procédé selon la revendication 2, **caractérisé en ce qu'**une détermination est effectuée afin de vérifier si au moins un objet mobile est détecté par au moins un capteur (3) du véhicule (1), l'au moins un capteur (3) étant configuré pour détecter des objets mobiles à l'intérieur d'un environnement de véhicule, une ouverture au moins partielle d'au moins une vitre (4) au moyen du lève-vitre étant réalisée, l'au moins une vitre (4) étant disposée sur le côté du véhicule (1) dirigé vers l'objet.

4. Procédé selon l'une des revendications précédentes, **caractérisé en ce qu'**une détermination est effectuée afin de vérifier si au moins un objet est détecté par au moins un capteur (3) du véhicule (1), l'au moins un capteur (3) étant configuré pour détecter des objets mobiles à l'intérieur d'un environnement de véhicule, la puissance acoustique étant réglée en fonction de la distance de l'objet détecté par rapport au véhicule (1).

5. Procédé selon l'une des revendications précédentes, **caractérisé en ce qu'**une détermination est effectuée afin de vérifier si au moins un objet est détecté par au moins un capteur (3) du véhicule (1), l'au moins un capteur (3) étant configuré pour détecter des objets mobiles à l'intérieur d'un environnement de véhicule, la puissance acoustique étant réglée en fonction de la direction de déplacement de l'objet détecté par rapport au véhicule (1).

6. Procédé selon l'une des revendications précédentes, **caractérisé en ce qu'**un signal optique est émis par une unité lumineuse (5), l'unité lumineuse (5) étant configurée pour délivrer le signal optique à au moins une partie de l'environnement du véhicule (1).

7. Procédé selon l'une des revendications précédentes, **caractérisé en ce que** le système d'assistance au conducteur est réalisé sous la forme d'un système d'assistance au stationnement (2) destiné à réaliser une opération d'entrée en stationnement et/ou une opération de sortie de stationnement et l'opération d'entrée en stationnement et/ou l'opération de sortie de stationnement comprend au moins deux opérations de stationnement différentes.

8. Procédé selon la revendication 7, **caractérisé en ce qu'**au moins le début de l'entrée en stationnement et/ou de la sortie de stationnement est inclus en tant qu'une première opération de stationnement, la manœuvre du véhicule en tant qu'une deuxième opération de stationnement, la fin de l'entrée en stationnement et/ou la sortie de stationnement en tant qu'une troisième opération de stationnement.

9. Procédé selon la revendication 7 ou 8, **caractérisé en ce que** différents signaux acoustiques sont fournis pour au moins deux opérations de stationnement différentes.

10. Procédé selon l'une des revendications précédentes, **caractérisé en ce que** le signal acoustique est conçu sous la forme d'une sortie vocale et/ou d'une sortie de son, notamment une mélodie et/ou une sortie sonore, notamment une alerte sonore.

11. Procédé selon l'une des revendications précédentes, **caractérisé en ce que** la puissance acoustique est réglée en fonction d'au moins un paramètre d'environnement du véhicule (1).

12. Système d'assistance au conducteur dans un véhicule (1) destiné à mettre en oeuvre le procédé selon l'une des revendications précédentes 1 à 11, le système d'assistance au conducteur possédant au moins un premier mode de fonctionnement pour faire fonctionner le véhicule (1) dans un niveau d'autonomie au moins partiellement automatisé,
une unité d'interprétation, qui est conçue pour enregistrer une présence d'un occupant du véhicule et
au moins un transducteur acoustique, l'au moins un transducteur acoustique étant disposé dans un habitacle du véhicule (1) et étant configuré pour émettre un signal acoustique ayant une puissance sonore, la puissance sonore étant réglable par le transducteur acoustique, **caractérisé en ce que** la puissance sonore peut être réglée par le transducteur acoustique en fonction de la présence d'un occupant du véhicule.

13. Système d'assistance au conducteur selon la revendication 12, **caractérisé en ce qu'**au moins une vitre (4) ouverte est présente, l'au moins une vitre (4) étant configurée de telle sorte que la vitre (4) peut être ouverte au moins partiellement en actionnant un lève-vitre, l'actionnement s'effectuant par le système d'assistance au conducteur en fonction de la puissance acoustique réglée, et/ou un toit coulissant ouverte est présent, le toit coulissant étant configuré de telle sorte que le toit coulissant peut être ouvert au moins partiellement en actionnant un dispositif d'entraînement de toit coulissant, l'actionnement s'effectuant par le système d'assistance au conducteur en fonction de la puissance acoustique réglée.

14. Système d'assistance au conducteur selon la revendication 12 ou 13, **caractérisé en ce qu'**un capteur (3) destiné à détecter au moins un objet mobile à l'intérieur d'un environnement de véhicule est présent, la vitre (4) au moins partiellement ouverte étant disposée sur le côté du véhicule (1) dirigé vers l'objet.

15. Système d'assistance au conducteur selon l'une des revendications précédentes 12 à 14, **caractérisé en ce qu'**un capteur (3) destiné à détecter au moins un objet mobile à l'intérieur d'un environnement de véhicule est présent, le transducteur acoustique étant configuré pour régler la puissance acoustique en fonction de la distance de l'objet détecté par rapport au véhicule (1).

16. Système d'assistance au conducteur selon l'une des revendications précédentes 12 à 15, **caractérisé en ce qu'**un capteur (3) destiné à détecter au moins un objet mobile à l'intérieur d'un environnement de véhicule est présent, le transducteur acoustique étant configuré pour régler la puissance acoustique en fonction de la direction de déplacement de l'objet détecté par rapport au véhicule (1).

17. Système d'assistance au conducteur selon l'une des revendications précédentes 12 à 16, **caractérisé en ce que** le signal acoustique est conçu sous la forme d'une sortie vocale et/ou d'une sortie de son, notamment une mélodie et/ou une émission sonore, notamment une alerte sonore.

18. Système d'assistance au conducteur selon l'une des revendications précédentes 12 à 17, **caractérisé en ce que** le système d'assistance au conducteur est un système d'assistance au stationnement.

19. Véhicule (1) équipé d'un système d'assistance au conducteur selon l'une des revendications précédentes 12 à 18, comprenant un habitacle pourvu d'un transducteur acoustique.

20. Programme informatique, comprenant des instructions qui ont pour effet que le système d'assistance au conducteur selon l'une des revendications précédentes 12 à 18 met en oeuvre le procédé selon l'une des revendications précédentes 1 à 11.

21. Signal porteur de données qui transmet le programme informatique selon la revendication 20.
